Europäisches Patentamt

(19) European Patent Office

Office européen des brevets

(11) Publication number: 0 294 920 B1

# (12) EUROPEAN PATENT SPECIFICATION

(45) Date of publication of patent specification:
09.10.91 Bulletin 91/41

(51) Int. Cl.⁵: A47J 31/043

(21) Application number: 88302582.7

(22) Date of filing: 24.03.88

(54) Heating apparatus.

(30) Priority: 09.06.87 JP 89124/87
10.06.87 JP 89740/87

(43) Date of publication of application:
14.12.88 Bulletin 88/50

(45) Publication of the grant of the patent:
09.10.91 Bulletin 91/41

(84) Designated Contracting States:
DE FR GB NL

(56) References cited:
GB-A- 659 658
GB-A- 777 399
GB-A- 1 510 114
US-A- 3 333 087

(56) References cited:
US-A- 3 430 232
US-A- 3 442 199
US-A- 3 585 921
US-A- 4 387 290

(73) Proprietor: SHARP KABUSHIKI KAISHA
22-22 Nagaike-cho Abeno-ku
Osaka 545 (JP)

(72) Inventor: Kimura, Shinichi
Ahban Konfohto 216 1-54, Asahi-machi
Yamatokoriyama-shi Nara-ken (JP)

(74) Representative: Hitchcock, Esmond Antony et
al
Lloyd Wise, Tregear & Co. Norman House
105-109 Strand
London WC2R 0AE (GB)

## Description

The present invention relates to heating apparatus for liquids for use for example in a vacuum coffee maker.

A vacuum coffee maker using an alcohol lamp as a heating source for heating a flask has been widely known. Operation of such coffee makers can be troublesome and inconvenient. More recently, consideration has been give to a vacuum coffee maker which was arranged so that the extraction of coffee essence could be automatically terminated, and the coffee kept warm by the selective operation of a heating element controlled by a thermal switch. An electric circuit for heating apparatus used in such a vacuum coffee maker is described in detail hereinafter.

Such coffee makers however, have a number of practical problems. For example, where coffee is to be made for a large number of persons, it is sometimes necessary to use the apparatus successively several times to make sufficient coffee. If the on-reset temperature of the thermal switch is set to a low value, the coffee maker cannot be used for a relatively long waiting period before the thermal switch turns on. On the other hand, if the on-reset temperature of the thermal switch is set to a high value, the thermal switch may turn on so as to energise the heating element too soon, and overheat coffee waiting to be poured.

The present invention is therefore directed at heating apparatus which can be used in coffee making in which a subject to be heated which has been boiled or fully heated once can be subject to low-temperature heating or heat-retaining without boiling again. Such apparatus is disclosed in GB-A-659,658 which has an electrical heating element for heating a subject to be heated, and means for detecting a temperature of the subject. Energizing control means are electrically connected to the temperature detecting means so as to control the supply of electric current to the heating member when the temperature detecting means is actuated to operate first after heating of the subject is started. According to the invention, switch means are included for cutting off connection of the temperature detecting means to the energizing control means in response to actuation of the energizing control means. The energizing control means comprises a first relay and a series circuit with a rectifier element and a thermosensitive element connected in series with the heating element, with the switch means comprising a second relay, the first relay being arranged to supply AC directly to the heating element in a period from start of heating to actuation of the temperature detecting means and to supply AC to the series circuit to thereby DC to the heating member after actuation of the temperature detecting means, the second relay being operative to cut off electrical connection of the temperature detecting means to series circuit by the first relay. Typically, the first relay comprises a make contact, a break contact, and a coil, and the second relay comprises a break contact and a coil, the make contact of the first relay being connected in series with the heating element, the break contact of the first relay being connected to the heating element through the series circuit, the coil of the first relay being connected to the temperature detecting means through the break contact of the second relay, and the coil of the second relay being connected to the break contact of the first relay. Each of the first and second relays may be a solid-state relay.

A convenient form of temperature detecting means is an automatic reset thermal switch or a thermal reed switch. Alternatively, the temperature detecting means may comprise a plurality of thermosensitive elements having different operating temperatures, with the apparatus including a switch for switching current conduction to the thermosensitive elements.

The invention will now be described by way of example and with reference to the accompanying drawings wherein ;

Figure 1 is a longitudinal sectional view showing an arrangement of a vacuum coffee maker including an embodiment of the heating apparatus of the present invention ;

Figure 2 is a block diagram of an electric circuit illustrating a first embodiment of the present invention ;

Figure 3 is a diagram explaining the operation of a coffee maker including the circuit of Figure 2 ;

Figure 4 is a block diagram of an electric circuit illustrating second embodiment of the present invention ;

Figure 5 is a diagram explaining the operation of a coffee maker including the circuit of Figure 4 ; and

Figure 6 is a block diagram of an electric circuit illustrating the prior art.

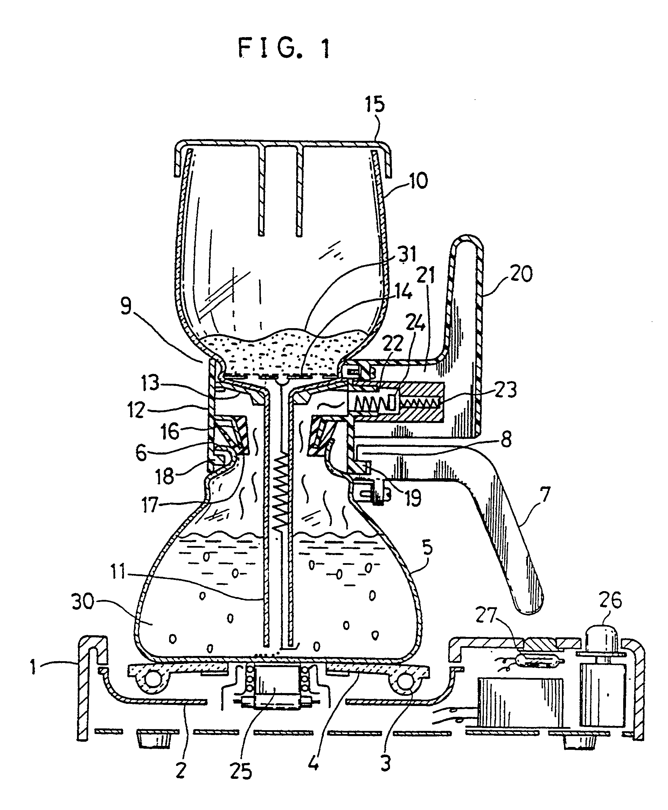

A vacuum coffee maker is shown in Figure 1, in which heating apparatus 1 is fitted with a shield 2 inside thereof, and a heating plate 4 in which a heater 3 is integrally incorporated is disposed on the shield 2. A first container or flask 5 forms a pouring opening 6 on an appropriate part of the upper opening as well as being provided at the opposite position of the pouring opening 6 with a handle 7 which is made of synthetic resin. A second engagement socket 8 among a pair of engagement sockets provided on the flask 5 is formed at the fixed end of the handle 7, while a first engagement socket is in combined use with the pouring opening 6 of the flask 5.

A second container or funnel 9 comprises a container body 10 which is made of glass and vertically provided with a pipe 11 at the lower part of the bottom thereof, and a container support (annular member) 12 which is made of synthetic resin and fixed on the outer periphery of the funnel body 10 with a gasket 13 interposed therebetween. The funnel body 10 whose inner bottom is removably fitted with a filter 14 receives coffee powder on the filter 14, and the upper opening thereof can be closed by means of a cover 15. The funnel support 12 integrally forms a cylinder 16 which is located at an adequate space on the outer periphery of a pipe 11 inside thereof, and the cylinder 16 is fitted with a gasket 17. Also, the funnel support 12 is formed at the lower end with a first engagement projection 18 which faces inwards and second projection 19 which faces outwards, thereby constituting an engagement support means with each of the engagement sockets and engagement projections.

As shown in Figure 1, by turning around the funnel in the state of press-fitting and compressing the gasket 17 against the opening of the flask 5, the funnel 9 engages an engagement projection 18 beneath the pouring opening 6 and an engagement projection 19 with the engagement socket 8, respectively, so that each engagement can be retained by means of elasticity of the gasket 17 and the juncture between the flask 5 and funnel 9 can be securely sealed.

The funnel support 12 described above has a handle 20 at a position where it faces the handle 7 on the flask 5 and provides a pressure control valve 21 at a position which is covered with the handle 20. The pressure control valve 21 comprising shape-memory alloy 22, spring 23, and valve body 24, opens to the inside of the flask 5 to expose itself to the air in the open state in the normal temperature, and then closes the same when an ambient temperature inside the flask 5 reaches a specified temperature.

In Figure 1, reference numeral 25 denotes a heat sensing device used for sensing temperatures at the bottom of the flask 5, reference numeral 26 a main switch, and reference numeral 27 a power indication lamp.

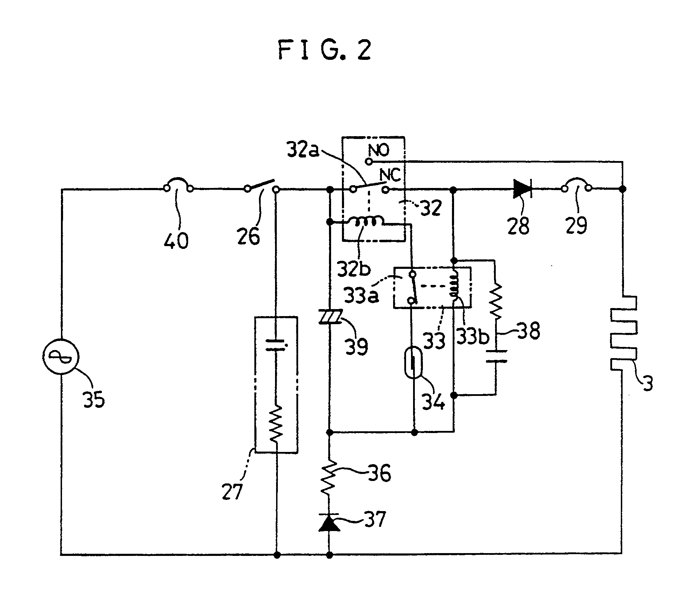

Figure 2 shows an electric circuit for the heating apparatus shown in Figure 1. The circuit is provided with a first relay 32 of the transfer type, a second relay 33 of the break contact type, a thermal switch 34 of the automatic reset type in which the heat sensing device 25 is incorporated, and an AC source 35.

The first relay 32 is provided with a relay switch 32a and a coil 32b, and the second relay 33 is provided with a relay switch 33a and a coil 33b. The relay switch 32a of the first relay 32 has a movable arm connected to one terminal of the AC source 35 through the main switch 26 ; a break contact NC connected to the other terminal of the AC source 35 through a heat-retaining control circuit, which is constituted by a diode 28 and a heat-retaining thermal switch 29, and the heater 3 ; and a make contact NO also connected to the other terminal of the AC source 35 through the heater 3. The coil 32b of the first relay 32 is connected at its one end to the one terminal of the AC source 35 through the main switch 26 and connected at its other end to the other terminal of the AC source 35 through a series connection of a break contact of the relay switch 33a of the second relay 33, the thermal switch 34, a resistor 36, and a diode 37. The coil 33b of the second relay 33 is connected at its one end to the break contact NC of the first relay 32 and connected at its other end to the juncture between the thermal switch 34 and the resistor 36. A CR delay circuit 38 is connected in parallel to the coil 33b. A capacitor 39 is connected in parallel to the series connection of the coil 32b, the relay switch 33a, and the thermal switch 34. An over-temperature preventing device 40 is inserted between the main switch 26 and the one terminal of the AC source 35.

In the circuit of Figure 2 energizing control means is constituted by the first relay 32 and the series connection of the diode 28 and the thermal switch 29, the second relay 33 constitutes a switch, and the reset thermal switch 34 forms temperature detecting means.

The first and second relays 32 and 33 are arranged to be driven by DC. This is because if the first and second relays 32 and 33 are driven by AC, it is difficult to make them operate in time, and there is a high possibility of causing a chattering phenomenon in the first relay 32. Further, the CR delay circuit 38 is provided to delay the operation of the second relay 33 by about tens msec to thereby stabilize the operation.

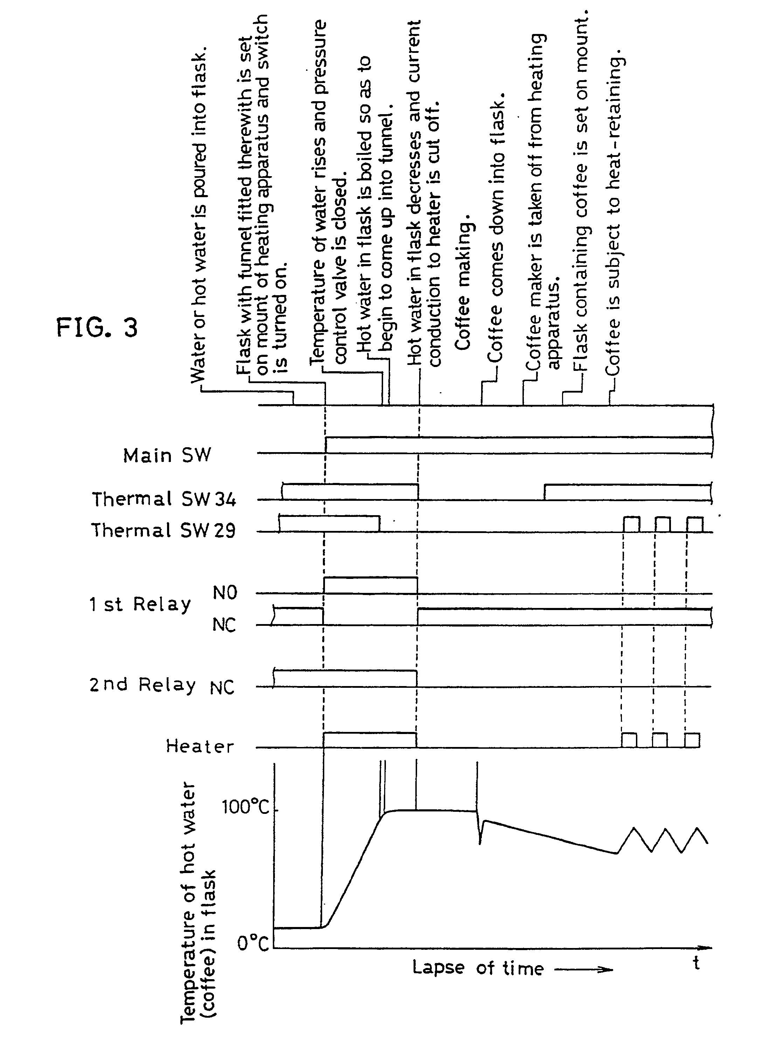

Referring to Figure 3, the operation of the heating apparatus according to Figures 1 and 2 will be described with reference to Figure 3. The temperature change shown in Figure 3 is not that detected by the thermal switch but that of the hot water in the flask.

The funnel 9 containing coffee powder 31 is coupled with the flask 5 containing water 30, and the flask 5 is mounted on the heating plate 4. Then, if the main switch 26 is turned on, because both the thermal switch 34 and the relay switch 33a are in the on-state, the coil 32b is energized to change over the relay switch 32a from the break contact NC to the make contact NO to thereby cause a full wave current to flow in the heater 3. The water 30 in the flask 5 is heated by the heater 3 so that the temperature of the water 30 begins to rise. Then, steam begins to be generated. At this time, however, the pressure control valve 21 of the flask 5 is open so that the inside of the flask 5 communicates with the air, and therefore the pressure in the flask 5 does not immediately rise. As the temperature of the hot water in the flask 5 comes close to boiling point steam is generated more extensively, and when the temperature in the flask 5 has reached a predetermined value the pressure control valve 21 is closed. With the pressure control valve 21 closed, the inside of the flask 5 becomes airtight and the inside pressure rises rapidly so as to push water into the funnel and up through the pipe 11 and the filter 14 into contact with the coffee powder 31. Thus, taste and aroma of the coffee powder 31 are effectively taken into the water.

If the boiling water within the flask 5 becomes little and the temperature of the remaining water has reached a predetermined value to make the thermal switch 34 turn off, the thermal switch 34 stops the current supply to the coil 32b, so that the relay switch 32a is changed over from the make contact NO to the break contact NC to thereby insert the heat-retaining control circuit in series to the heater 3. At this time, however, the thermal switch 29 is in the off-state and therefore the current conduction to the heater 3 is stopped. On the other hand, the second relay 33 makes its relay switch 33a turn off later than the turn-on of the break contact NC of the first relay 32 by for example, ten msec by the action of the CR delay circuit 38.

After the heating operation by the heater 3 is stopped, the temperature in the flask 5 begins to fall so that the pressure in the flask 5 goes negative, and the coffee solution in the funnel 9 is drawn into the flask 5 through the filter 14 and the pipe 11.

After the extraction of coffee essence, the flask 5 and the funnel 9 are rotated relatively to each other by grasping the handles 7 and 20 to release the engagement between the engagement projection 18 and the pouring opening 6 and th engagement between the engagement projection 19 and the second engagement socket 8, so as to make it possible to draw the funnel 9 out of the flask 5 and to pour the coffee solution into a coffee cup or the like from the flask 5. The temperature of the remaining coffee solution in the flask 5 can be maintained at 80-85°C by the on-off operation of the thermal switch 29 if the flask 5 is mounted on the heating plate 4.

In the case where the coffee solution is not taken immediately after the extraction of coffee essence and the flask 5 is left as it is in the state that the flask 5 is fitted with the funnel 9, the temperature at the bottom of the flask 5 comes down and the thermal switch 34 is reset into the on-state when the temperature has reached a predetermined value to reset the thermal switch 34. At this time, however, the relay switch 33a is in the off-state and therefore no current is supplied to the coil 32b of the first relay 32 so that the relay switch 32a maintains its break contact NC in the on-state and the heating operation with a full wave current by the heater 3 is prevented. If the temperature in the flask 5 drops further, the supply of current to the heater 3 is controlled by the on-off operation of the thermal switch 29 and the half-wave current conduction by the diode 28 so that the temperature of the coffee solution in the flask 5 is maintained at 80-85°C. At that time, it is a matter of course that the heat-retaining control is performed so as not to make the coffee solution in the flask 5 comes up into the funnel 9, because the pressure control valve 21 is in the closed state.

A vacuum coffee maker as described above can be used successively even when the on-reset temperature of the thermal switch is set on at a higher temperature, and does not provoke a further extraction of coffee essence even if the funnel is allowed to remain fitted in the flask.

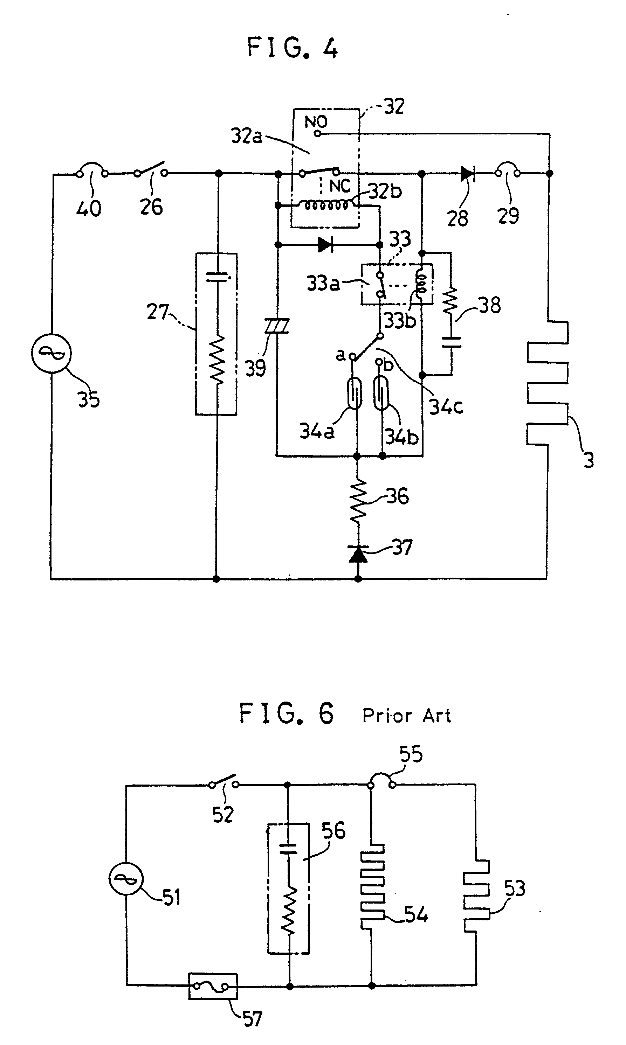

Figure 4 is an electric circuit diagram of a second embodiment of the heating apparatus according to the invention. The second embodiment is different from the first embodiment only in the construction of the switch means. In this second embodiment, the switch means is constituted by automatic reset thermal switches 34a and 34b having different operating temperatures, and which are incorporated in the heat sensing device 25, and a changeover switch 34c for changing over the connection of the relay switch 33a of the second relay 33 between the thermal switches 34a and 34b. When used in a vacuum coffee maker, the changeover switch is operable to vary the density of coffee to be made.

Since the respective operating temperatures $T_1$ and $T_2$ of the thermal switches 34a and 34b are different, there occurs a time lag $t_1$ from a point of time at which the thermal switch 34a turns off to a point of time at which the thermal switch 34b turns off. For example, in the case where the power consumption of the heater 3 is selected to be around 550 watts and the difference between the respective operating temperatures $T_1$ and $T_2$ of the thermal switches 34a and 34b is set to 3°C, the above time lag $t_1$ is about 30 sec and the thermal switch 34b turns off about 30 sec after the turn-off of the thermal switch 34a.

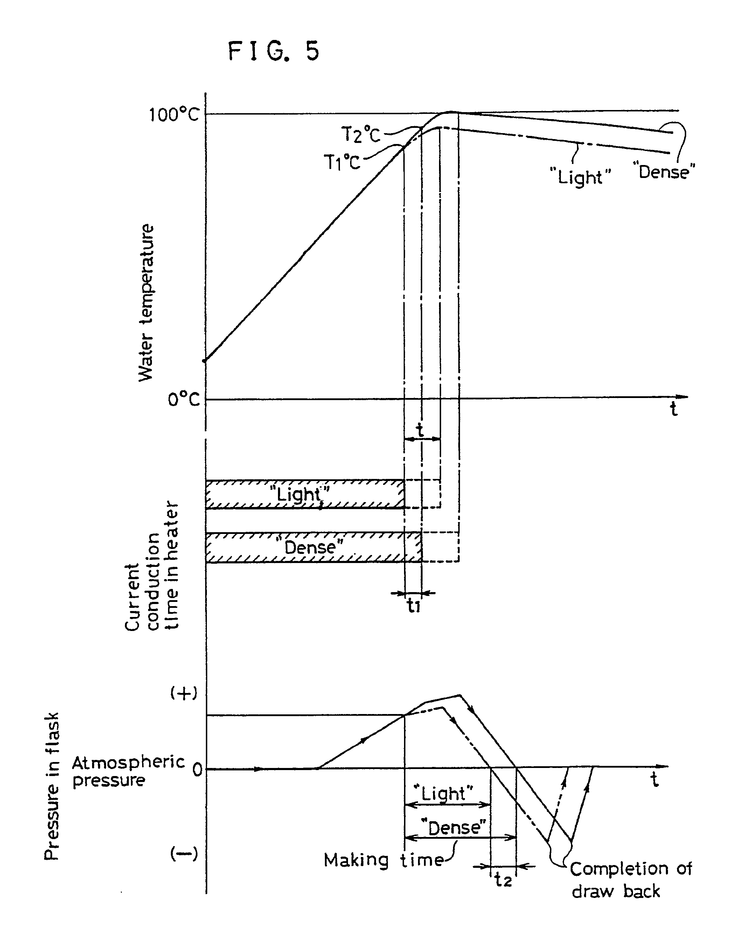

The operation of this second embodiment of the invention will now be described with reference to Figure 5. The process after the turn-on of the main switch 26 to the actuation of the thermal switch 34a (34b) is the same as that in the first embodiment, and will not be described again.

In the condition that the changeover switch 34c is switched to the a contact side, the current conduction to the coil 32b is cut off when the thermal switch 34a turns off so that the relay switch 34a is switched from the make contact NO to the break contact NC to insert the heat-retaining control circuit in series to the heater 3. At this point in time, although the heating by the heater 3 is stopped because of the off-state of the thermal switch 29, the heat capacity of the heating plate 4 is so large that the temperature is kept in the same state as in the heating mode for about t sec. After the lapse of time of t sec, the temperature inside the flask 5 begins to come down, and when the pressure inside of the flask 5 becomes negative, the coffee solution in the funnel 9 is drawn back into the flask 5 through the filter 14 and pipe 11.

In the alternative condition that the changeover switch 34c is switched to the b contact side, since the thermal switch 34b turns off later than the turn-off of the thermal switch 34a with a time lag of $t_1$ sec, the period of time after the hot water in the flask 5 has been pushed up into the funnel 9 till the coffee solution is drawn back into the flask 5, that is, the time of the extraction of coffee essences, is prolonged by about $t_2$ sec ($\approx t_1$ sec) so that the thus obtained coffee solution is stronger compared with the case of the thermal switch 34a.

Thus, in the second embodiment of the invention described above, it is possible to obtain weaker coffee when the changeover switch 34c is switched to the a contact side, and stronger coffee when the changeover switch 34c is switched to the b contact side. Different strengths of coffee can be made available by increasing the number of thermosensitive elements. This second embodiment then, not only enables the coffee making operation to be automatically terminated, but also enables the user to select the strength of the coffee that is made.

Although a relay with contacts is used as each of the first and second relays in each of the above embodiments, the use of one or more solid-state relays is also contemplated in accordance with the invention.

In the prior art illustrated in Figure 6, the circuit is constituted t, y an AC source 51, a main switch 52, a water heater 53 for heating a flask, a heat-retaining heater 54 for the flask, a thermal switch 55 of the automatic reset type which turns on/of in response to a change of temperature at the bottom of the flask, a power-on indicating lamp 56, and an over-temperature preventing device 57. If the main switch 52 is turned on, the water in the flask is heated by the water heater 53 and the heat-retaining heater 54 so as to become hot water. The hot water is pushed up into a funnel by the pressure rising inside the flask so that the flask is heated with no water therein. In this condition, the thermal switch 55 turns off so that the current conduction to the water heater 53 is cut off and the operation mode is changed over from the water heating operation to the heat retaining operation. Thereafter, when the temperature inside the flask comes down to thereby lower the inside pressure, the coffee solution in the funnel is drawn back into the flask so as to be contained therein. The temperature of the coffee solution contained in the flask does not fall so rapidly by means of heat of the heat-retaining heater 54 but slowly comes down and finally reaches about 80-85°C at which the coffee solution is subject to heat-retaining.

The circuit of Figure 6 can provide satisfactory performance in some circumstances, but has the disadvantages referred to above. These disadvantages are mitigated by the present invention, as will be apparent from the foregoing.

## Claims

1. Heating apparatus having an electrical heating element (3) for heating a subject to be heated ; means (25) for detecting the temperature of the subject ; and energizing control means electrically connected to the temperature detecting means (25) to control the supply of electric current to the heating element (3) when the temperature detecting means (25) is actuated to operate first after heating of the subject is started ; CHARACTERISED IN THAT switch means (33) are included for cutting off connection of the temperature detecting means (25) to the energizing control means in response to actuation of the energizing control means ; and in that the energizing control means comprises a first relay (32) and a series circuit with a rectifier element and a thermosensitive element is connected in series with the heating element, the switch means comprising a second relay (33), the first-relay being arranged to supply AC directly to the heating element (3) in a period from start of heating to actuation of the temperature detecting means (25) and to supply AC to the series circuit to thereby supply DC to the heating element (3) after actuation of the temperature detecting means (25), the second relay (33) being operative to cut off electrical connection of the temperature detecting means (25) to the series circuit by the first relay (32).

2. Apparatus according to Claim 1 CHARACTERISED IN THAT each of the first and second relays (32, 33) is a solid-state relay.

3. Apparatus according to Claim 1 CHARACTERISED IN THAT the first relay comprises a make contact, a break contact, and a coil, and the second relay comprises a break contact and a coil, the make contact of the first relay being connected in series with the heating element (3), the break contact of the first relay being connected to the heating element through the series circuit, the coil (32b) of the first relay being connected to the, temperature detecting means (25) through the break contact of the second relay, and the coil (33b) of the second relay being connected to the break contact of the first relay.

4. Apparatus according to any preceding Claim CHARACTERISED IN THAT the temperature detecting means (25) is an automatic reset thermal switch (34).

5. Apparatus according to any of Claims 1 to 3 CHARACTERISED IN THAT the temperature detecting means (25) comprises a plurality of thermosensitive elements having different operating temperatures, the apparatus including a switch for switching current conduction to the thermosensitive elements.

6. Apparatus according to any preceding Claim CHARACTERISED BY means (4) for supporting a liquid container on the heating element.

7. A vacuum coffee maker including apparatus according to Claim 6.

## Patentansprüche

1. Heizeinrichtung mit einem elektrischen Heizelement (3) zur Erwärmung eines zu beheizenden Gegenstands, mit einer Einrichtung (25) zur Abtastung der Temperatur des Gegenstands sowie mit einer Energieüberwachungseinrichtung, die mit der Temperaturabtasteinrichtung (25) elektrisch verbunden ist zur Steuerung der Stromzufuhr zum Heizelement (3), nachdem zunächst nach Beginn der Aufheizung des Gegenstands die Temperaturabtasteinrichtung (25) aktiviert wurde, **dadurch gekennzeichnet, daß**

eine Schalteinrichtung (33) vorhanden ist zur Unterbrechung der Verbindung der Temperaturabtasteinrichtung (25) mit der Energieüberwachungseinrichtung in Abhängigkeit von der Aktivierung der Energieüberwachungseinrichtung, und daß

die Energieüberwachungseinrichtung ein erstes Relais (32) und eine Reihenschaltung eines Gleichrichterelements und eines thermosensitiven Elements in Reihe mit dem Heizelement umfaßt, die Schaltereinrichtung ein zweites Relais (33) aufweist, wobei das erste Relais so angeordnet ist, daß das Heizelement (3) während einer Periode vom Beginn der Aufheizung bis zur Auslösung der Temperaturabtasteinrichtung (25) mit einem Wechselstrom gespeist wird, während die Reihenschaltung ebenfalls mit Wechselstrom beaufschlagt ist, so daß dem Heizelement (3) nach Auslösung der Temperaturabtasteinrichtung (25) ein Gleichstrom zufließt, und wobei das zweite Relais (33) zur Unterbrechung der elektrischen Verbindung der Temperaturabtasteinrichtung (25) zur genannten Reihenschaltung über das erste Relais (32) dient.

2. Einrichtung nach Anspruch 1, **dadurch gekennzeichnet, daß** das erste und das zweite Relais (32, 33) jeweils ein Festkörperrelais ist.

3. Einrichtung nach Anspruch 1, **dadurch gekennzeichnet, daß** das erste Relais einen Arbeitskontakt, einen Unterbrecherkontakt und eine Wicklung und das zweite Relais einen Unterbrecherkontakt und eine Wicklung aufweisen, daß der Arbeitskontakt des ersten Relais in Reihe zum Heizelement (3) liegt, der Unterbrecherkontakt des ersten Relais über die Reihenschaltung mit dem Heizelement verbunden ist, die Wicklung (32b) des ersten Relais über den Unterbrecherkontakt des zweiten Relais mit der Temperaturabtasteinrichtung (25) verbunden ist, und daß die Wicklung (33b) des zweiten Relais an den Unterbrecherkontakt des ersten Relais angeschlossen ist.

4. Einrichtung nach wenigstens einem der vorstehenden Ansprüche, **dadurch gekennzeichnet, daß** die Temperaturabtasteinrichtung (25) ein automatisch rückstellender Thermoschalter (34) ist.

5. Einrichtung nach einem der Ansprüche 1 bis 3, **dadurch gekennzeichnet, daß** die Temperaturabtasteinrichtung (25) eine Mehrzahl von thermosensitiven Elementen für verschiedene Betriebstemperaturen aufweist, und daß die Einrichtung einen Schalter zur Stromdurchschaltung zu den thermosensitiven Elementen aufweist.

6. Einrichtung nach wenigstens einem der vorstehenden Ansprüche, **gekennzeichnet durch** eine Vorrichtung (4) zur Abstützung eines Flüssigkeitsbehälters auf dem Heizelement.

7. Vakuum-Kaffeemaschine mit der Einrichtung nach Anspruch 6.

## Revendications

1. Dispositif de chauffage comportant un élément chauffant électrique (3) pour chauffer un objet devant être chauffé ; des moyens (25) pour détecter la température de l'objet ; des moyens de commande d'excitation raccordés électriquement aux moyens (25) de détection de la température pour commander l'envoi du courant électrique à l'élément chauffant (3) lorsque les moyens (25) de détection de la température sont actionnés dès que le chauffage de l'objet a commencé ; caractérisé en ce que

il est prévu des moyens de commutation (33) servant à interrompre la connexion entre les moyens (25) de détection de la température et les moyens de commande d'excitation en réponse à l'actionnement de ces moyens ; et

en ce que les moyens de commande d'excitation comprennent un premier relais (32), et qu'un circuit série comportant un élément redresseur et un élément thermosensible est branché en série avec l'élément chauffant, les moyens de commutation comprenant un second relais (33), le premier relais étant agencé de manière à envoyer un courant alternatif directement à l'élément chauffant (3) pendant une période s'étendant depuis le début du chauffage jusqu'à l'actionnement des moyens (25) de détection de la température et pour envoyer un courant alternatif au circuit série de manière à envoyer de ce fait un courant alternatif à l'élément chauffant (3) après l'actionnement des moyens (25) de détection de la température, le second relais (33) agissant de manière à interrompre la connexion électrique entre les moyens (25) de détection de la température et le circuit série, au moyen du premier relais (32).

2. Dispositif selon la revendication 1, caractérisé en ce que chacun desdits premier et second relais (32, 33) est un relais à l'état solide.

3. Dispositif selon la revendication 1, caractérisé en ce que le premier relais comprend un contact de fermeture, un contact d'ouverture et une bobine et que le second relais comprend un contact d'ouverture et une bobine, le contact de fermeture du premier relais étant branché en série avec l'élément chauffant (3), le contact d'ouverture du premier relais étant raccordé à l'élément chauffant au moyen du circuit série, la bobine (32b) du premier relais étant raccordée aux moyens (25) de détection de la température par l'intermédiaire du contact d'ouverture du second relais, et la bobine (33b) du second relais étant raccordée au contact d'ouverture du premier relais.

4. Dispositif selon l'une quelconque des revendications précédentes, caractérisé en ce que les moyens (25) de détection de la température sont constitués par un thermorupteur (34) à retour automatique à l'état initial.

5. Dispositif selon l'une quelconque des revendications 1 à 3, caractérisé en ce que les moyens (25) de détection de la temperature comprennent une pluralité d'éléments thermosensibles possédant des températures de fonctionnement différentes, le dispositif incluant un interrupteur pour commuter la conduction du courant en direction des éléments thermosensibles.

6. Dispositif selon l'une quelconque des revendications précédentes, caractérisé par des moyens (4) servant à supporter un récipient à liquide sur l'élément chauffant.

7. Cafetière à dépression comprenant un dispositif selon la revendication 6.

# F I G. 1

EP 0 294 920 B1

# F I G. 2

9

# FIG. 3

Water or hot water is poured into flask.

Flask with funnel fitted therewith is set on mount of heating apparatus and switch is turned on.

Temperature of water rises and pressure control valve is closed.

Hot water in flask is boiled so as to begin to come up into funnel.

Hot water in flask decresses and current conduction to heater is cut off.

Coffee making.

Coffee comes down into flask.

Coffee maker is taken off from heating apparatus.

Flask containing coffee is set on mount.

Coffee is subject to heat-retaining.

Main SW

Thermal SW 34

Thermal SW 29

1 st Relay    NO
              NC

2 nd Relay NC

Heater

Temperature of hot water (coffee) in flask

100°C

0°C

Lapse of time ⟶    t

FIG. 4

FIG. 6    Prior Art

# F I G. 5